# EUROPEAN PATENT SPECIFICATION

(11) **EP 2 528 276 B1**
(45) Date of publication and mention of the grant of the patent: **27.08.2014**
(21) Application number: 11732688.4
(22) Date of filing: 17.01.2011
(51) Int. Cl.: H04L 12/24

(54) **METHOD FOR CONTROLLING RESOURCES ON SHARED NETWORK ELEMENT, SHARED NETWORK ELEMENT AND RELEVANT DEVICE**
VERFAHREN FÜR STEUERUNG VON RESSOURCEN IN EINEM GEMEINSAM GENUTZTEN NETZWERKELEMENT, GEMEINSAM GENUTZTES NETZWERKELEMENT UND DAFÜR RELEVANTE VORRICHTUNG
PROCÉDÉ DE GESTION DES RESSOURCES SUR UN ÉLÉMENT DE RÉSEAU PARTAGÉ, ÉLÉMENT DE RÉSEAU PARTAGÉ ET DISPOSITIF CORRESPONDANT

(30) Priority: 18.01.2010 CN 201010001030
(43) Date of publication of application: 28.11.2012
(73) Proprietor: Huawei Technologies Co., Ltd., Shenzhen, Guangdong 518129 (CN)
(72) Inventor: YANG, Shengqiang, Shenzhen Guangdong 518129 (CN)
(74) Representative: Goddar, Heinz J.
(86) International application number: PCT/CN2011/070338
(87) International publication number: WO 2011/085698

(56) References cited:
- EP-A1- 1 327 934
- EP-A2- 0 952 698
- WO-A1-2008/112688
- CN-A- 1 744 761
- CN-A- 1 929 397
- CN-A- 101 511 131
- CN-A- 101 511 131
- CN-A- 101 764 711
- US-A1- 2009 047 957

## Description

### FIELD OF THE INVENTION

The present invention relates to the field of telecommunication network management technologies, and in particular, to a method for operating a resource on a shared network element, a shared network element and a relevant device.

### BACKGROUND OF THE INVENTION

A telecommunication management network (TMN, Telecommunication Management Network) architecture is a reference model of a telecommunication management method, and the purpose thereof is to distribute various functions to different layers, for example, a network management layer (NML, Network Management Layer), an element management layer (EML, Element Management Layer) and a network element layer (NEL, Network Element Layer). The TMN separates management responsibilities according to these layers, and requires every layer to provide an interface interacting with an adjacent layer, and these interfaces support communication between applications. Generally, a device on the NML layer is referred to as a network management system (NMS, Network Management System), a device on the EML layer is referred to as an element management system (EMS, Element Management System), and the functions of the NEL layer are embedded in an element (Element), which are further subdivided into a front administrator module (FAM, Front Administrator Module) and a back administrator module (BAM, Back Administrator Module). The FAM and the BAM are internally connected, and together provide management functions, such as configuration, maintenance, traffic measurement and failure reporting of each function module in the network element.

With rapid development of telecommunication technologies, telecommunication convergence, for example, service convergence, network convergence, transmission convergence, charging convergence, network management convergence and terminal device convergence, already becomes a development trend, and this trend progresses stably to a more extensive and more profound level in the telecommunication field. The telecommunication convergence is not merely limited within a single operator. In future, convergence of network devices is surely to be performed among a plurality of operators. Through sharing and the convergence of the network devices among a plurality of operators, a total cost of ownership (TCO, Total Cost of Ownership) of network construction of each operator may be greatly reduced, avoiding repeated investment and a waste of resources in a society. Therefore, how to make a plurality of operators together and securely manage these shared telecommunication devices (or shared network elements) becomes an important subject thereof.

Under the above TMN architecture, a method for managing a network element provided by the prior art includes authority-based management and domain-based management, where the authority-based management is to divide different operation authority management users according to different operation authorities, and the domain-based management is to firstly divide, according to different domains, an entire network into sub-networks of the different domains, and then divide, according to different management domains, operation management users of the different domains.

CN 101511131A discloses a routing method that is applied to a network shared by multiple operators. On the shared network, a resource configuration data base of a shared telecommunication device includes information about an operator to which shared resources belong, a connection route list of the shared telecommunication device includes the routing information of a dedicated network of each operator and information about the route includes the information about the operator. The method includes: When receiving a service request message of a user terminal, obtaining, according to the shared resources occupied by the user terminal, the information about the operator to which the occupied shared resources belong from the resource configuration database; and matching the routing information in the connection route list according to the information about the operator to which the occupied shared resources belong, and forwarding the service request message according to successfully matched routing information.

Moreover, WO 2008/112688 A1 discloses a base station for processing a plurality of communication channels for up to a plurality of network operators, comprising a transceiver module communicatively coupled to up to a plurality of network operators, the transceiver module configured to process a plurality of upstream communication channels and a plurality of downstream communication channels based on one or more wireless communication modulation protocols, each of the upstream and downstream communication channels associated with one of the network operators.

Furthermore, EP 0 952 698 A2 discloses a system for restricting data base access to managed object information using a permissions table. An access control data base is disclosed that has access control objects that collectively store information that specifies access rights by users to specified sets of the managed objects. The specified access rights include access rights to obtain management information from the network. A permissions table defines a subset of rows in the database tables that are accessible to at least one of the users. The set of database table rows that are accessible corresponds to the managed object access rights specified by the access control database.

EP 1 327 934 A1 discloses a system for providing secure access and separation to and between multiple operator's network management when they share network elements. The method relies on a compartmented operating system having a number of compartments which corresponds to the number of operators, each compartment having its own access control. An operator is assigned to respective compartment:

In studies on the prior art, it is found that although the authority-based management and the domain-based management improve security of current network management to a certain extent, the network management of the two modes is network management classification within one operator, and operation and maintenance users from different operators are naturally separated by different telecommunication management network devices on the network management layer. When a plurality of operators shares a certain network element, every operator may operate all resources on the network element, resulting in a security problem that occurs in network element management among the operators.

### Summary of the invention

Embodiments of the present invention provide a method for operating a resource on a shared network element, an element management system, and a relevant device, which are used for solving a resource security problem that occurs when a network management solution of the prior art manages a shared network element under telecommunication convergence.

A method for operating a resource on a shared network element includes: receiving, from a user, an operation management command for operating a resource on a shared network element; according to the operation management command, acquiring an operator attribute of the resource to be operated and an operator attribute of the user; and if the operator attribute of the user is consistent with the operator attribute of the resource to be operated, performing an operating action corresponding to the operation management command.

A shared network element includes: a command receiving module, configured to receive, from a user, an operation management command for operating a resource on the shared network element, where the operation management command carries an identifier of the resource to be operated; a first attribute acquiring module, configured to acquire an operator attribute of the user according to the operation management command; a second attribute acquiring module, configured to acquire an operator attribute of the resource to be operated according to the operation management command; and a performing module, configured to perform an operating action corresponding to the operation management command when the operator attribute of the user acquired by the first attribute acquiring module is consistent with the operator attribute of the resource to be operated acquired by the second attribute acquiring module.

A communication system includes a network element management apparatus and a shared network element,
where the network element management apparatus is configured to provide a man-machine interface, and receive an operation management command input by a user through the man-machine interface, acquire an operator attribute of the user, and encapsulate the operator attribute of the user in the operation management command, and send the encapsulated operation management command to the shared network element, wherein the operation management command is used to operate a resource on the shared network element; and
the shared network element is configured to receive the encapsulated operation management command, acquire the operator attribute of the user from the encapsulated operation management command,
acquire an operator attribute of the resource to be operated according to the encapsulated operation management command, and
perform an operating action corresponding to the operation management command when the operator attribute of the user is consistent with the operator attribute of the resource to be operated.

In the embodiments of the present invention, the operation management command from the user is received, and the operator attribute of the user and the operator attribute of the resource to be operated by the operation management command are acquired. The operator attribute of the user is matched or compared with the operator attribute of the resource to be operated, and only when they are consistently matched, the operating action corresponding to the operation management command is performed. Otherwise, a failure message is directly returned. Therefore, even if a plurality of operators shares the same network element, each operator may still manage the network element relatively independently, and it may be guaranteed that an operation and maintenance user of each operator can only operate a relevant resource belonging to the operator on the shared network element and cannot operate a resource belonging to another operator, thereby solving a network management security problem in network management convergence of the plurality of operators under the telecommunication convergence.

### BRIEF DESCRIPTION OF THE DRAWINGS

FIG. 1 is a schematic diagram of a telecommunication management network architecture provided by an embodiment of the present invention;
FIG. 2 is a basic schematic flow chart of a method for operating a resource on a shared network element provided by Embodiment 1 of the present invention;
FIG. 3 is a schematic diagram of network management convergence networking of two operators sharing one base station system provided by an embodiment of the present invention;
FIG. 4 is a basic schematic flow chart of a method for operating a resource on a shared network element provided by Embodiment 2 of the present invention;
FIG. 5 is a schematic diagram of a basic logical structure of a shared network element provided by an embodiment of the present invention; and
FIG. 6 is a schematic diagram of a basic logical structure of a communication system provided by Embodiment 7 of the present invention.

### DETAILED DESCRIPTION OF THE EMBODIMENTS

An embodiment of the present invention provides a method for operating a resource on a shared network element. An operation management command from a user is received, an operator attribute of the user is acquired, and when the operator attribute of the user is consistent with an operator attribute of the resource to be operated, an operating action corresponding to the operation management command is performed. Embodiments of the present invention further provide a corresponding element management system and a relevant device, which are detailed in the following.

In an embodiment of the present invention, resources on a shared network element are classified. For example, two types (or two levels) are classified: common resources and specialized resources, where the common resources do not belong to any operator, and belong to common resources of the shared network element device, such as a power supply or a cabinet. The specialized resources are resources exclusively belonging to a certain operator, such as carrier frequency resources in a case that a plurality of operators shares a base station system. The specialized resources need to be subdivided according to the operators to which they belong, for example, specialized resources of an operator A and specialized resources of an operator B. Generally, when resource configuration is performed on the shared network element, differentiation is performed by adding operator attributes of the resources.

Further, the operator attributes of the resources on the shared network element are configured, and these operator attributes indicate the operators to which the resources belong. When the operator attributes of the resources are configured, certain field may be adopted to identify the operator attributes of the resources, for example, a field 0x0000 is used to identify that a resource does not belong to any operator and is a common resource on the shared network element. A field 0xabcd is used to identify that a resource is a specialized resource of an operator numbered 0xabcd.

Alternatively, a resource to be operated and an operator attribute thereof may also be directly identified. For example, the operator attribute may be directly encoded into an identifier (ID) of the resource to be operated for carrying, and the format is:

| | |
|---|---|
| Operator code | Resource to be operated object code |

That is, the identifier of the resource carries the operator attribute of the resource to be operated.

It should be noted that, in the embodiment of the present invention, the resources may be organized in a form of an object tree. In this way, the operator attributes of the resources follow a compliance principle, that is, an operator attribute of a child node (a resource object) inherits an operator attribute of a parent node (a resource object). For example, the parent node is already configured with the operator attribute 0x1234 (identified by a field 0x1234), and a lower level child node and an even lower level child node thereof both automatically inherit the operator attribute 0x1234 (identified by the field 0x1234). The child node cannot be changed into another operator attribute, unless the operator attribute of the parent node belongs to no operator. That is to say, if the operator attribute of the parent node is a common resource, when a child node is established, the operator attribute of the child node may be arbitrarily specified. The attribute compliance principle or the organization form of the object tree simplifies the process of configuring the operator attribute of the resource object, thereby improving the efficiency and convenience of configuring the operator attribute of the resource object by the system.

In the embodiment of the present invention, management users capable of operating a shared network element are classified, for example, into three types (or three levels): common operation management users, operator operation management users and privileged users, where a common operation management user can only operate a common resource on the shared network element, an operator operation management user can only operate a resource exclusively belonging to a certain operator on the shared network element, and a privileged user may operate any resource on the shared network element. Generally, when user configuration is performed on a network management device, differentiation is performed by adding operator attributes of the users.

Further, when the operator attributes of the users are configured, some fields may be adopted to identify the users. For example, a field 0x0000 is used to identify a user as a common operation management user, a field 0xabcd is used to identify a user as an operator operation management user with the operator numbered 0xabcd, and a field 0xFFFF is used to identify a user as a privileged user.

Alternatively, a user and an operator attribute thereof may also be directly identified. For example, the operator attribute may be directly encoded into an identifier (ID) of the user, and the format is: user ID = user name@operator, that is, the identifier of the user carries the operator attribute of the user.

It should be noted that, in the embodiment of the present invention, the operator attribute of the user follows an attribute compliance principle, that is, when a user A creates a new user B, the user B automatically inherits the operator attribute of the user A. The user A cannot create a user with an operator attribute different from that of the user A, unless the user A is a privileged user. Specifically, a privileged user may create a sub-user, and may arbitrarily specify the operator attribute of the sub-user. The attribute compliance principle simplifies the process of configuring the operator attribute of the sub-user, thereby improving the efficiency and convenience of configuring the operator attribute of the user by the system.

Specifically, the present invention emphasizes on security control of the specialized resources, that is, it is limited to that the specialized resources exclusively belong to a certain operator, and only an operation management user of this operator may operate the specialized resources. The common resources do not belong to any operator, and only a common operation management user may operate this type of resources or any user may operate this type of resources. Specifically, a privileged user may operate all the resources.

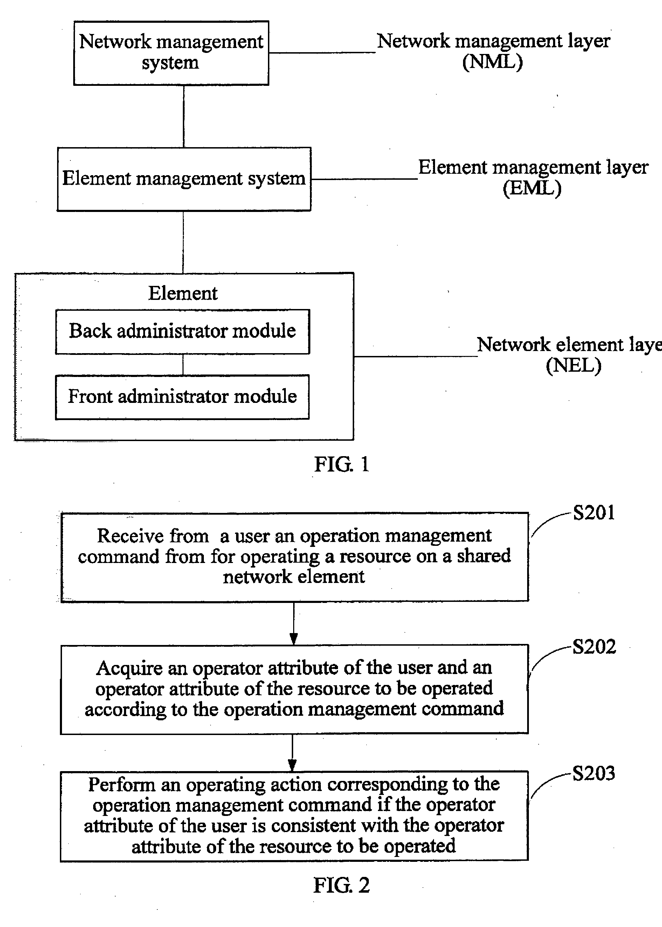

Specific deployment of resource configuration information and user configuration information may be very flexible, and they may be deployed on a network management device on any layer. For example, in a telecommunication management network architecture provided by an embodiment of the present invention shown in FIG. 1, the resource configuration information and the user configuration information may be specifically deployed on a network element layer, an element management layer, a network management layer or the like. The two may be deployed on network management devices on the same layer, and may also be separately deployed on network management devices on different layers.

Generally, the resource configuration information is configured on a network element, and the user configuration information may be configured on a network management device on any layer.

In the embodiment of the present invention, the operator attributes of the resources may be configured in the resource configuration information, and the operator attributes of the users may be configured in the user configuration information.

Refer to FIG. 2, FIG. 2 is a basic schematic flow chart of a method for operating a resource on a shared network element provided by Embodiment 1 of the present invention.

It is taken into account that only a part of network elements in a network system are shared in an early stage of the application of shared network elements. In this scenario, to minimize influences on other devices and network elements, and simultaneously to spare extra workload paid by an operator to eliminate these influences, in this embodiment, network management convergence is implemented on the shared network elements, and operation management user configuration information containing the operator attribute of a user, and resource configuration information containing the operator attribute of a resource to be operated, are both configured on the shared network element. In this way, when it is needed to operate a resource on the shared network element, a user may directly log into the shared network element and perform an operating action corresponding to an operation management command.

The basic flow of the method for operating a resource on a shared network element, provided by Embodiment 1 shown in FIG. 2, mainly includes the following steps.

Step S201: Receive, from a user, an operation management command for operating a resource on a shared network element.

In this embodiment, because a user configuration information base (configured with operator attributes of users) and a resource configuration information base (configured with operator attributes of resources) are both configured on the shared network element, the user directly logs into the shared network element through a maintenance console, and directly delivers the operation management command to the shared network element. The operation management command may carry an identifier of the resource to be operated, and an operating action includes, but is not limited to, adding, modifying, deleting and querying.

It should be noted that, before receiving the operation management command from the user, the method further includes: configuring the operator attribute of the resource to be operated and configuring the operator attribute of the user, or identifying the user and the operator attribute thereof and identifying the resource to be operated and the operator attribute thereof. The specific configuration or identification solution is already illustrated above, which will not be described herein again.

Step S202: According to the operation management command, acquire the operator attribute of the user and acquire the operator attribute of the resource to be operated.

Generally, when the user logs in, the user is authenticated and login connection information is established; in subsequent message processing, an identifier of the user may be acquired according to the login connection information of the user established at the time of the user logging into the shared network element. If the identifier of the user directly carries operator attribute information of the user, the operator attribute information is directly acquired from the identifier of the user. If the operator attribute information of the user is stored in the user configuration information base, then according to the identifier of the user, the user configuration information base is queried for acquiring the operator attribute of the user.

In this embodiment, the operation management command may carry an identifier of the resource to be operated. Therefore, the identifier of the resource to be operated may be acquired from the operation management command. If the identifier of the resource directly carries operator attribute information of the resource, the operator attribute information is directly acquired from the identifier of the resource; if the operator attribute information of the resource is stored in the resource configuration information base, then according to the identifier of the resource, the resource configuration information base is queried for acquiring the operator attribute of the resource to be operated.

Step S203: If the operator attribute of the user is consistent with the operator attribute of the resource to be operated, perform an operating action corresponding to the operation management command.

If the operator attribute of the user is consistent with the operator attribute of the resource to be operated, it is indicated that the operator to which the user belongs and the operator to which the resource to be operated belongs are the same operator, and it is secure to perform the operating action corresponding to the operation management command from the user. For example, if the operator attribute of the user is P, and the operator attribute of the resource to be operated is also P, it is indicated that the operator to which the user belongs and the operator to which the resource to be operated belongs are the same operator, and the operating action corresponding to the operation management command may be performed. If the operator attribute of the user is inconsistent with the operator attribute of the resource to be operated, the performing the operating action corresponding to the operation management command is terminated, and preferably, a message in response to the failure of the performing the command may be returned to the user.

Specifically, a privileged user may operate all the resources on the shared network element, that is, it may be regarded that the operator attribute of the privileged user is consistent with the operator attribute of any resource on the shared network element, and therefore, in the embodiment of the present invention, if the operator attribute of the user is determined as a privileged user, the operating action corresponding to the operation management command is performed unconditionally.

In this embodiment, the operation management command of the user is received, and the operator attribute of the user and the operator attribute of the resource to be operated by the operation management command are acquired. When the operator attribute of the user and the operator attribute of the resource to be operated are consistently matched, the operating action corresponding to the operation management command is performed. When they are unmatched or inconsistent, a failure message is directly returned, and the performing the operating action corresponding to the operation management command is terminated. Therefore, even if a plurality of operators shares the same network element, each operator may still manage the network element relatively independently, and it may be guaranteed that an operation and maintenance user of each operator can only operate a relevant resource belonging to the operator on the shared network element and cannot operate a resource belonging to another operator, thereby solving a network management security problem in network management convergence of the plurality of operators under telecommunication convergence.

To understand Embodiment 1 of the present invention more clearly, an example that two operators share a base station controller (BSC, Base Station Controller) of one base station system is taken for illustration in the following.

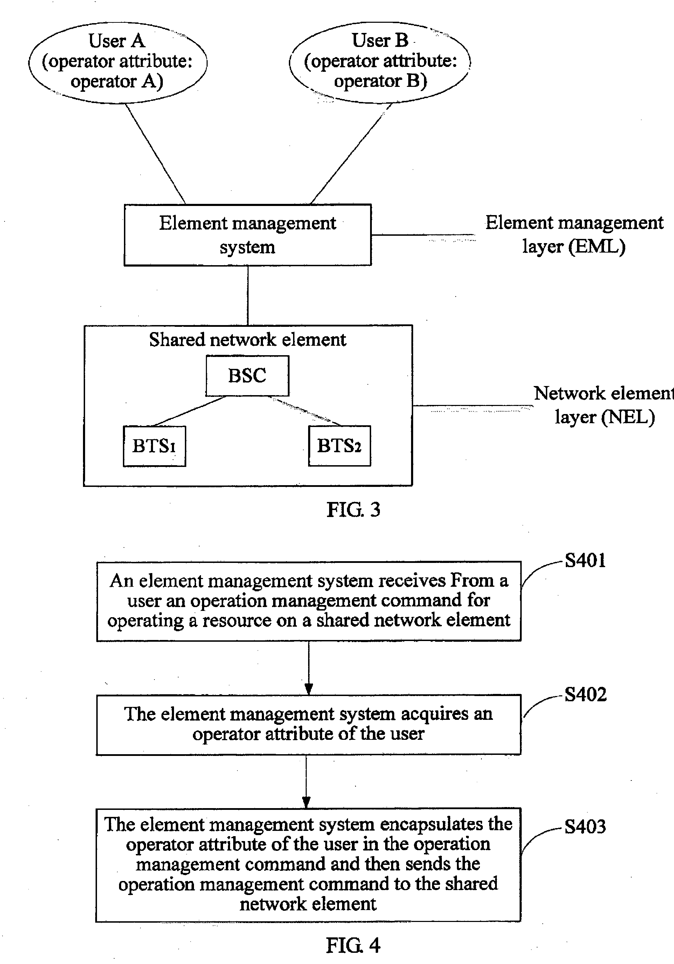

As shown in FIG. 3, a shared network element BSC of an operator A and an operator B controls a base transceiver station 1 (BTS₁) and a base transceiver station 2 (BTS₂). It is assumed that a cell carrier frequency resource C₁ belongs to the operator A, a cell carrier frequency resource C₂ belongs to the operator B, the operator attribute of a user U₁ is A, and the operator attribute of a user U₂ is B. The user U₁ or the user U₂ may directly log into the shared network element BSC through a maintenance console, and operates the cell carrier frequency resources belonging to its corresponding operator on the shared network element BSC.

### Embodiment E1

Step S1: A user U₁ inputs an operation management command for modifying a cell carrier frequency resource C₁.

Step S2: A BSC receives the operation management command.

Step S3: The BSC acquires the operator attribute A of the user U₁, and if the operator attribute A of the user U₁ indicates that the user U₁ is a privileged user, directly proceed to step S6; otherwise, continue with step S4.

Step S4: According to an identifier of the cell carrier frequency resource C₁ in the operation management command, the BSC queries a resource configuration information base to acquire the operator attribute A of the cell frequency carrier resource C₁.

Step S5: Determine whether the operator attribute of the user U₁ and the operator attribute of the cell carrier frequency resource C₁ are consistent (that is, determine whether the user U₁ and the cell carrier frequency resource C₁ both belong to an operator A), and if they are consistent, continue with step S6; and if they are inconsistent, terminate the performing the operation management command, and return a failure response.

Step S6: Perform the operation of modifying the cell carrier frequency resource C₁, and return a success response after the operation is finished.

Because the operator attribute of the user U₁ is consistent with the operator attribute of the cell carrier frequency resource C₁ (that is, the user U₁ and the cell carrier frequency resource C₁ both belong to the operator A), a result of the above embodiment E1 is to perform the operation of modifying the cell carrier frequency resource C₁ and return a success response after the operation is finished.

### Embodiment E2

Step S1: A user U₁ inputs an operation management command for modifying a cell carrier frequency resource C₂.

Step S2: A BSC receives the operation management command.

Step S3: The BSC acquires the operator attribute A of the user U₁, and if the operator attribute A of the user U₁ indicates that the user U₁ is a privileged user, directly proceed to step S6; otherwise, continue with step S4.

Step S4: According to an identifier of the cell carrier frequency resource C₂, the BSC queries a resource configuration information base for resources to be operated to acquire the operator attribute of the cell carrier frequency resource C₂.

Step S5: Determine whether the operator attribute of the user U₁ and the operator attribute of the cell carrier frequency resource C₂ are consistent (that is, determine whether the user U₁ and the cell carrier frequency resource C₂ both belong to an operator A), and if they are consistent, continue with step S6; and if they are inconsistent, terminate the performing the operation management command, and return a failure response.

Step S6: Perform the operation of modifying the cell carrier frequency resource C₂, and return a success response after the operation is finished.

Because the operator attribute of the user U₁ is inconsistent with the operator attribute of the cell carrier frequency resource C₂ (the user U₁ belongs to an operator A, and the cell carrier frequency resource C₂ belongs to an operator B), a result of the above embodiment E2is to terminate the performing the operation of modifying the cell carrier frequency resource C₂ and return a failure response.

It can be learned from Embodiment 1 of the present invention that, in the embodiment of the present invention, the operation management command of the user is received, the operator attribute of the user and the operator attribute of the resource to be operated by the operation management command are acquired, the operator attribute of the user is matched or compared with the operator attribute of the resource to be operated, and only when they are consistently matched, the operating action corresponding to the operation management command is performed; otherwise, a failure message is directly returned. Therefore, even if a plurality of operators shares the same network element, each operator may still manage the network element relatively independently, and it may be guaranteed that an operation and maintenance user of each operator can only operate a relevant resource belonging to the operator on the shared network element and cannot operate a resource belonging to another operator, thereby solving a network management security problem in the network management convergence of the plurality of operators under the telecommunication convergence.

With large scale popularization of the shared network elements, for a situation where the number of shared network elements is large, the user configuration information may be deployed upward, for example, deployed on an element management system EMS, and the resource configuration information base may be deployed on the shared network element, thereby reducing the difficulty of the configuration and maintenance of user configuration information.

In Embodiment 2 provided by the present invention, the user configuration information is deployed on the element management system EMS, and the resource configuration information base may be deployed on the shared network element.

A basic flow of a method for operating a resource on a shared network element, provided by Embodiment 2 of the present invention shown in FIG. 4, mainly includes the following steps.

Step S401: The element management system receives, from a user, an operation management command for operating a resource on a shared network element.

In this embodiment, a user configuration information base (configured with operator attributes of users) is configured in the element management system EMS. Therefore, the user firstly logs into the element management system EMS through a maintenance console, and the operation management command is delivered to the shared network element through the EMS. Besides, in this embodiment, the operator attribute of the user is not configured on the shared network element, and therefore, the EMS needs to guarantee that the operation management command delivered to the shared network element carries the operator attribute of the user.

It should be noted that, before receiving the operation management command from the user, the method further includes: configuring the operator attribute of the resource to be operated and configuring the operator attribute of the user, or identifying the user and the operator attribute thereof and identifying the resource to be operated and the operator attribute thereof. The specific configuration or identification solution is already illustrated above, which will not be described herein again.

Step S402: The element management system acquires the operator attribute of the user.

In this embodiment, the element management system EMS acquires an identifier of the user according to login connection information of the user established at the time of the user logging into the shared network element. If the identifier of the user directly carries operator attribute information of the user, the operator attribute information is directly acquired from the identifier of the user. If the operator attribute information of the user is stored in the user configuration information base, then according to the identifier of the user, the user configuration information base is queried for acquiring the operator attribute of the user.

Step S403: The element management system encapsulates the operator attribute of the user in the operation management command and then sends the operation management command to the shared network element.

When the shared network element receives the operation management command delivered by the element management system EMS, an identifier of the resource to be operated is acquired from the operation management command, and the operator attribute of the user may also be acquired from the operation management command. For example, by parsing the operation management command, the operator attribute of the user encapsulated in the operation management command is acquired. If the identifier of the resource directly carries operator attribute information of the resource, the operator attribute information is directly acquired from the identifier of the resource; if the operator attribute information of the resource is stored in a resource configuration information base, then according to the identifier of the resource, the resource configuration information base is queried for acquiring the operator attribute of the resource to be operated.

Further, the shared network element compares the operator attribute of the user with the operator attribute of the resource to be operated, and if the operator attribute of the user is consistent with the operator attribute of the resource to be operated, it is indicated that the operator to which the user belongs and the operator to which the resource to be operated belongs is the same operator, and it is secure to perform an operating action corresponding to the operation management command from the user. For example, if the operator attribute of the user is that the user is allowed to operate a resource exclusively belonging to an operator P on the shared network element, and the operator attribute of the resource to be operated is that the resource to be operated exclusively belongs to the operator P (that is, only the operator P may operate the resource to be operated), it is indicated that the operator to which the user belongs and the operator to which the resource to be operated belongs are the same operator, and the operating action corresponding to the operation management command may be performed. If the operator attribute of the user is inconsistent with the operator attribute of the resource to be operated, the performing the operating action corresponding to the operation management command is terminated.

Same as Embodiment 1, a privileged user may operate all the resources on the shared network element, that is, it may be regarded that the operator attribute of the privileged user is consistent with the operator attribute of any resource on the shared network element. Therefore, in the embodiment of the present invention, if the operator attribute of the user is determined as a privileged user, the operating action corresponding to the operation management command is performed unconditionally.

An example that two operators share a base station controller (BSC, Base Station Controller) of one base station system as shown in FIG. 3 in Embodiment 1 is taken in the following to illustrate the solution of Embodiment 2.

In FIG. 3, except that an assumed precondition that the user configuration information is configured on the element management system EMS is different from an assumed precondition of Embodiment 1, other assumed preconditions are the same. A user U₁ or a user U₂ may log into the element management system EMS through a maintenance console, and forwards an operation management command to a shared network element BSC through the element management system EMS, so that the operation of a cell carrier frequency resource belonging to its corresponding operator on the shared network element BSC is implemented.

### Embodiment E3

Step S1: A user U₁ inputs an operation management command for modifying a cell carrier frequency resource C₁, where the operation management command carries an identifier of the cell carrier frequency resource C₁.

Step S2: An element management system EMS receives the operation management command.

Step S3: The element management system EMS acquires an identifier of the U₁ according to user login connection information, queries a configuration information base of the user U₁ to acquire the operator attribute of the user U₁.

Step S4: The element management system EMS sends, to a BSC, the operation management command of the user U₁ for modifying the cell carrier frequency resource C₁, where this operation management command is encapsulated with the acquired operator attribute of the user U₁.

Step S5: The BSC receives the operation management command encapsulated with the operator attribute of the user U₁.

Step S6: The BSC determines whether the user U₁ is a privileged user according to the operator attribute of the user U₁, and if it is a privileged user, directly proceed to step S9; otherwise, continue with step S7.

Step S7: The BSC queries a resource configuration information base for resources to be operated according to the identifier of the cell carrier frequency resource Cito acquire the operator attribute of the cell carrier frequency resource C₁.

Step S8: Determine whether the operator attribute of the user U₁ and the operator attribute of the cell carrier frequency resource C₁ are consistent (that is, determine whether the user U₁ and the cell carrier frequency resource C₁ both belong to an operator A), and if they are consistent, continue with step S6; and if they are inconsistent, terminate the performing the operation management command, and return a failure response.

Step S9: The BSC performs the operation of modifying the cell carrier frequency resource C₁, and returns a success response after the operation is finished.

Because the operator attribute of the user U₁ is consistent with the operator attribute of the cell carrier frequency resource C₁ (that is, the user U₁ and the cell carrier frequency resource C₁ both belong to the operator A), a result of the above embodiment E3 is to perform the operation of modifying the cell carrier frequency resource C₁ and return a success response after the operation is finished.

It can be learned from Embodiment 2 of the present invention that, in the embodiment of the present invention, the operation management command of the user is received, and the operator attribute of the user and the operator attribute of the resource to be operated by the operation management command are acquired. The operator attribute of the user is matched or compared with the operator attribute of the resource to be operated, and only when they are consistently matched, an operating action corresponding to the operation management command is performed. Otherwise, a failure message is directly returned. Therefore, even if a plurality of operators shares the same network element, each operator may still manage the network element relatively independently, and it may be guaranteed that an operation and maintenance user of each operator can only operate a relevant resource belonging to the operator on the shared network element and cannot operate a resource belonging to another operator, thereby solving a network management security problem in network management convergence of the plurality of operators under telecommunication convergence.

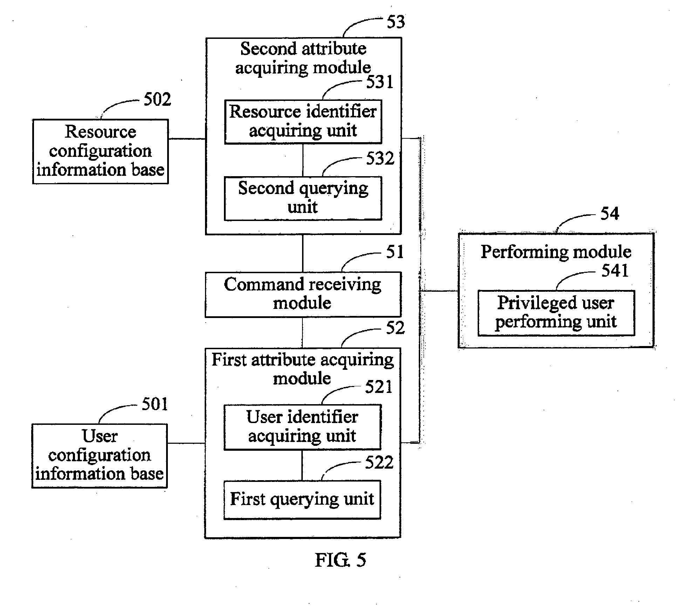

Refer to FIG. 5, FIG. 5 is a schematic diagram of the basic logical structure of a shared network element provided by an embodiment of the present invention. For ease of illustration, only a part related to the embodiment of the present invention is shown. Function modules in a shared network element are a software module, a hardware module or a module of a combination of the software and the hardware, which are described in detail in the following.

A command receiving module 51 is configured to receive, from a user, an operation management command for operating a resource on the shared network element, where the operation management command carries an identifier of the resource to be operated.

A first attribute acquiring module 52, configured to acquire an operator attribute of the user according to the operation management command received by the command receiving module 51, includes:
a user identifier acquiring unit 521, configured to acquire an identifier of the user according to login connection information of the user established at the time of the user logging into the shared network element; and
a first querying unit 522, configured to query a user configuration information base 501 according to the identifier of the user.

A second attribute acquiring module 53, configured to acquire an operator attribute of the resource to be operated according to the operation management command received by the command receiving module 51, includes:
a resource identifier acquiring unit 531, configured to acquire an identifier of the resource from the operation management command received by the command receiving module 51; and
a second querying unit 532, configured to query a resource configuration information base 502 according to the identifier of the resource to be operated acquired by the resource identifier acquiring unit 531.

A performing module 54 is configured to perform an operating action corresponding to the operation management command when the operator attribute of the user acquired by the first attribute acquiring module 52 is consistent with the operator attribute of the resource to be operated acquired by the second attribute acquiring module 53.

Besides, the performing module 54 may include a privileged user performing unit 541, configured to determine whether the user is a privileged user, and if the operator attribute of the user is a privileged user, perform the operating action corresponding to the operation management command.

The operator attribute of the user indicates the operator to which the user belongs, which type of resources on the shared network element may be operated, and so on. For example, if the operator attribute of the user is a common operation management user, the user can only operate a common resource on the shared network element; if the operator attribute of the user is an operator operation management user, the user can only operate a resource exclusively belonging to a certain operator on the shared network element; or, if the operator attribute of the user is a privileged user, the user may operate any resource on the shared network element. Generally, when user configuration is performed on a network management device, differentiation is performed by adding operator attributes of users. For example, the operator attribute of the user may be configured in a database, such as the user configuration information base 501, or may also be directly configured in the identifier of the user; likewise, the operator attribute of the resource to be operated may be configured in a database, such as the resource configuration information base 502, and may also be directly configured in the identifier of the resource to be operated. The method for configuring the operator attribute is already illustrated in detail in the foregoing embodiment, which will not be described herein again.

In this embodiment, when the user logs in, the user is authenticated, the login connection information is established, and the user identifier acquiring unit 521 may acquire the identifier of the user according to the login connection information of the user established at the time of the user logging into the shared network element. If the identifier of the user directly carries operator attribute information of the user, the first attribute acquiring module 52 directly acquires the operator attribute of the user from the identifier of the user. If the operator attribute information of the user is stored in a user configuration information base, then the first querying unit 522 queries the user configuration information base 501 (stored in the shared network element) according to the identifier of the user, so that the first attribute acquiring module 52 acquires the operator attribute of the user.

When the command receiving module 51 receives the operation management command from the user, because the operation management command contains the identifier of the resource, if the identifier of the resource directly carries operator attribute information of the resource, the resource identifier acquiring unit 531 may directly acquire the identifier of the resource from the operation management command. If the operator attribute information of the resource is stored in a resource configuration information base, the second querying unit 532 queries the resource configuration information base 502 (stored in the shared network element) of the resource to be operated according to the identifier of the resource to be operated acquired by the resource identifier acquiring unit 531, so that the second attribute acquiring module 53 acquires the operator attribute of the resource to be operated. If the operator attribute of the user acquired by the first attribute acquiring module 52 is consistent with the operator attribute of the resource to be operated acquired by the second attribute acquiring module 53, the performing module 54 performs the operating action corresponding to the operation management command; otherwise, the performing the operating action corresponding to the operation management command is terminated.

It can be learned from the above embodiment of the present invention that, in the embodiment of the present invention, the operation management command of the user is received, and the operator attribute of the user and the operator attribute of the resource to be operated by the operation management command are acquired. The operator attribute of the user is matched or compared with the operator attribute of the resource to be operated, and only when they are consistently matched, the operating action corresponding to the operation management command is performed. Otherwise, a failure message is directly returned. Therefore, even if a plurality of operators shares the same network element, each operator may still manage the network element relatively independently, and it may be guaranteed that an operation and maintenance user of each operator can only operate a relevant resource belonging to the operator on the shared network element and cannot operate a resource belonging to another operator, thereby solving a network management security problem in network management convergence of the plurality of operators under telecommunication convergence.

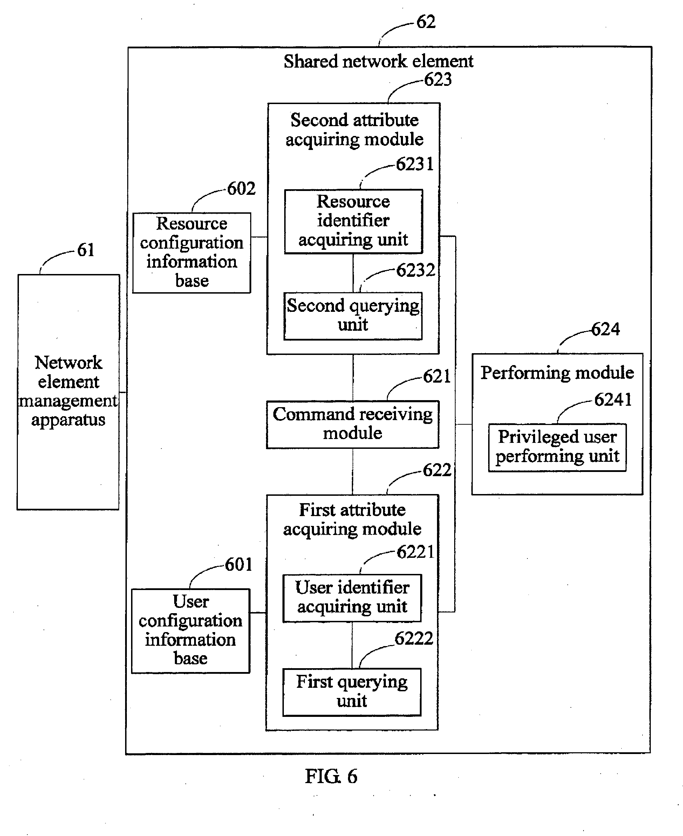

Refer to FIG. 6, FIG. 6 is a schematic diagram of the basic logical structure of a communication system provided by an embodiment of the present invention. For ease of illustration, only a part related to the embodiment of the present invention is shown. The communication system includes a network element management apparatus 61 and a shared network element 62, and function modules thereof are a software module, a hardware module or a module of a combination of the software and the hardware, which are described in detail in the following.

The network element management apparatus 61 is configured to provide a man-machine interface and send, to the shared network element 62, an operation management command input by a user through the man-machine interface, where the operation management command is used to operate a resource on a shared network element.

The shared network element 62 includes:
a command receiving module 621, configured to receive from the user the operation management command for operating a resource on the shared network element;
a first attribute acquiring module 622, configured to acquire the operator attribute of the user according to the operation management command received by the command receiving module 621, and including:
   a user identifier acquiring unit 6221, configured to acquire an identifier of the user according to login connection information of the user established at the time of the user logging into the shared network element; and
   a first querying unit 6222, configured to query a user configuration information base 601 according to the identifier of the user;
   a second attribute acquiring module 623, configured to acquire the operator attribute of the resource to be operated according to the operation management command received by the command receiving module 621, and including:
      a resource identifier acquiring unit 6231, configured to acquire an identifier of the resource from the operation management command received by the command receiving module 621; and
      a second querying unit 6232, configured to query a resource configuration information base 602 according to the identifier of the resource to be operated acquired by the resource identifier acquiring unit 6231; and
      a performing module 624, configured to perform an operating action corresponding to the operation management command when the operator attribute of the user acquired by the first attribute acquiring module 622 is consistent with the operator attribute of the resource to be operated acquired by the second attribute acquiring module 623, where the performing module 624 may include a privileged user performing unit 6241, configured to determine whether the user is a privileged user, and if the operator attribute of the user is a privileged user, perform the operating action corresponding to the operation management command.

It should be noted that, information interactions and implementation processes between the modules/units in the above device are based on the same concept as the method embodiments of the present invention, so reference may be made to the description in the method embodiments of the present invention for details, and details are not repeated herein.

Persons of ordinary skill in the art should understand that all or a part of the steps of methods according to the embodiments may be implemented by a program instructing relevant hardware. The program may be stored in a computer readable medium, and the storage medium may include a Read Only Memory (ROM, Read Only Memory), a Random Access Memory (RAM, Random Access Memory), a magnetic disk, or an optical disk.

The method for operating a resource on a shared network element, the shared network element and the relevant device provided by the embodiments of the present invention are described in detail above. The principle and implementation of the present invention are described herein through specific examples. The description about the embodiments is merely provided for ease of understanding of the method and the core ideas of the present invention. Persons of ordinary skill in the art can make variations to the present invention in terms of the specific implementation and application scope according to the ideas of the present invention. Therefore, the specification shall not be construed as a limit to the present invention.

## Claims

1. A method for operating a resource on a shared network element, comprising:
receiving (201), from a user, an operation management command for operating a resource on a shared network element; and **characterized by**
acquiring (202) an operator attribute of the resource to be operated and an operator attribute of the user according to the operation management command; and
performing (203) an operating action corresponding to the operation management command if the operator attribute of the user is consistent with the operator attribute of the resource to be operated.

2. The method according to claim 1, wherein the acquiring the operator attribute of the user according to the operation management command comprises:
acquiring an identifier of the user from login connection information of the user upon reception of the operation management command; and
acquiring the operator attribute of the user from the identifier of the user;
wherein the identifier of the user is preconfigured to indicate the operator attribute of the user.

3. The method according to claim 1, wherein the acquiring the operator attribute of the user according to the operation management command comprises:
acquiring an identifier of the user from login connection information of the user upon reception of the operation management command; and
querying a user configuration information base of the user according to the identifier of the user to acquire the operator attribute of the user;
wherein the user configuration information base stores the operator attribute of the user corresponding to the identifier of the user.

4. The method according to claim 1, wherein the acquiring the operator attribute of the user according to the operation management command comprises: acquiring the operator attribute of the user from the operation management command; wherein the operation management command carries the operator attribute of the user.

5. The method according to any one of claims 1to 4, wherein the acquiring the operator attribute of the resource to be operated according to the operation management command comprises:
acquiring an identifier of the resource to be operated from the operation management command, and
acquiring the operator attribute of the resource to be operated from the identifier of the resource to be operated;
wherein the operation management command carries the identifier of the resource to be operated, and the identifier of the resource to be operated is preconfigured to indicate the operator attribute of the resource to be operated.

6. The method according to any one of claims 1 to 4, wherein the acquiring the operator attribute of the resource to be operated according to the operation management command comprises:
acquiring an identifier of the resource to be operated from the operation management command; and
querying a resource configuration information base to acquire the operator attribute of the resource to be operated;
wherein the operation management command carries the identifier of the resource to be operated, and wherein the resource configuration information base stores the operator attribute of the resource to be operated corresponding to the identifier of the resource to be operated.

7. The method according to any one of claims 1 to 6, wherein if the operator attribute of the user is inconsistent with the operator attribute of the resource to be operated, the performing the operating action corresponding to the operation management command is terminated.

8. The method according to any one of claims 1 to 6, wherein after the acquiring the operator attribute of the user, the method further comprises:
determining whether the user is a privileged user according to the operator attribute of the user, and if the user is a privileged user, performing the operating action corresponding to the operation management command.

9. A shared network element, comprising:
a command receiving module (51), configured to receive, from a user, an operation management command for operating a resource on the shared network element,
wherein the operation management command carries an identifier of the resource to be operated; and **characterized by**:
a first attribute acquiring module (52), configured to acquire an operator attribute of the user according to the operation management command;
a second attribute acquiring module (53), configured to acquire an operator attribute of the resource to be operated according to the operation management command; and
a performing module (54), configured to perform an operating action corresponding to the operation management command when the operator attribute of the user acquired by the first attribute acquiring module is consistent with the operator attribute of the resource to be operated acquired by the second attribute acquiring module.

10. The shared network element according to claim 9,
wherein the first attribute acquiring module is configured to: acquire an identifier of the user according to login connection information of the user; and perform any one of the following:
querying a user configuration information base according to the identifier of the user to acquire the operator attribute of the user, wherein the user configuration information base stores the operator attribute of the user corresponding to the identifier of the user; and
acquiring the operator attribute of the user from the identifier of the user, wherein the identifier of the user is preconfigured to indicate the operator attribute of the user; and
wherein the second attribute acquiring module is configured to: acquire the identifier of the resource to be operated from the operation management command received by the command receiving module; and perform any one of the following:
querying a resource configuration information base according to the identifier of the resource to be operated to acquire the operator attribute of the resource to be operated, and wherein the resource configuration information base stores the operator attribute of the resource to be operated corresponding to the identifier of the resource to be operated; and
acquiring the operator attribute of the resource to be operated from the identifier of the resource to be operated, wherein the identifier of the resource to be operated is preconfigured to indicate the operator attribute of the resource to be operated.

11. The shared network element according to claim 9 or 10, wherein the performing module comprises:
a privileged user performing unit, configured to determine whether the user is a privileged user according to the operator attribute of the user, and if the user is a privileged user, perform the operating action corresponding to the operation management command.

12. The shared network element according to any one of claims 9 to 11, wherein the performing module is further configured to terminate the performing of the operating action corresponding to the operation management command, when the operator attribute of the user is inconsistent with the operator attribute of the resource to be operated.

13. A communication system, comprising a network element management apparatus and a shared network element, wherein
the network element management apparatus (61) is configured to provide a man-machine interface, receive an operation management command input by a user through the man-machine interface, acquire an operator attribute of the user, and encapsulate the operator attribute of the user in the operation management command, and send the encapsulated operation management command to the shared network element, wherein the operation management command is used to operate a resource on the shared network element; and
the shared network element (62) is configured to receive the encapsulated operation management command, and **characterized by** the shared network element (62) further being configured to
acquire the operator attribute of the user from the encapsulated operation management command, acquire an operator attribute of the resource to be operated according to the encapsulated operation management command, and perform an operating action corresponding to the operation management command when the operator attribute of the user is consistent with the operator attribute of the resource to be operated.

14. The system according to claim 13, wherein the network element management apparatus is configured to acquire an identifier of the user according to login connection information of the user; and perform any one of the following:
querying a user configuration information base according to the identifier of the user to acquire the operator attribute of the user, wherein the user configuration information base is configured on the shared network element (62) and stores the operator attribute of the user corresponding to the identifier of the user; and
acquiring the operator attribute of the user from the identifier of the user, wherein the identifier of the user is preconfigured to indicate the operator attribute of the user.

15. The system according to claim 13 or 14, wherein the shared network element is configured to acquire the identifier of the resource to be operated from the encapsulated operation management command, wherein the operation management command carries the identifier of the resource; and perform any one of the following:
querying a resource configuration information base according to the identifier of the resource to be operated to acquire the operator attribute of the resource to be operated, and wherein the resource configuration information base is configured on the shared network element (62) and stores the operator attribute of the resource to be operated corresponding to the identifier of the resource to be operated; and
acquiring the operator attribute of the resource to be operated from the identifier of the resource to be operated, wherein the identifier of the resource to be operated is preconfigured to indicate the operator attribute of the resource to be operated.

## Patentansprüche

1. Verfahren zum Betreiben eines Betriebsmittels auf einem gemeinsam verwendeten Netzelement, das Folgendes umfasst:
Empfangen (201) eines Betriebsmanagementbefehls zum Betreiben eines Betriebsmittels auf einem gemeinsam verwendeten Netzelement von einem Anwender; und **gekennzeichnet durch**
Erfassen (202) eines Bedienerattributs des Betriebsmittels, das betrieben werden soll, und eines Bedienerattributs des Anwenders gemäß dem Betriebsmanagementbefehl; und
Ausführen (203) eines Betriebsvorgangs, der dem Betriebsmanagementbefehl entspricht, falls das Bedienerattribut des Anwenders mit dem Bedienerattribut des Betriebsmittels, das betrieben werden soll, konsistent ist.

2. Verfahren nach Anspruch 1, wobei das Erfassen des Bedienerattributs des Anwenders gemäß dem Betriebsmanagementbefehl Folgendes umfasst:
Erfassen einer Kennung des Anwenders aus Login-Verbindungsinformationen des Anwenders nach dem Empfang des Betriebsmanagementbefehls; und
Erfassen des Bedienerattributs des Anwenders aus der Kennung des Anwenders;
wobei die Kennung des Anwenders vorkonfiguriert ist, um das Bedienerattribut des Anwenders anzugeben.

3. Verfahren nach Anspruch 1, wobei das Erfassen des Bedienerattributs des Anwenders gemäß dem Betriebsmanagementbefehl Folgendes umfasst:
Erfassen einer Kennung des Anwenders aus Login-Verbindungsinformationen des Anwenders nach dem Empfang des Betriebsmanagementbefehls; und
Abfragen einer Anwenderkonfigurationsinformationsbasis des Anwenders gemäß der Kennung des Anwenders, um das Bedienerattribut des Anwenders zu erfassen;
wobei die Anwenderkonfigurationsinformationsbasis das Bedienerattribut des Anwenders, das der Kennung des Anwenders entspricht, speichert.

4. Verfahren nach Anspruch 1, wobei das Erfassen des Bedienerattributs des Anwenders gemäß dem Betriebsmanagementbefehl Folgendes umfasst: Erfassen des Bedienerattributs des Anwenders aus dem Betriebsmanagementbefehl; wobei der Betriebsmanagementbefehl das Bedienerattribut des Anwenders führt.

5. Verfahren nach einem der Ansprüche 1 bis 4, wobei das Erfassen des Bedienerattributs des Betriebsmittels, das betrieben werden soll, gemäß dem Betriebsmanagementbefehl Folgendes umfasst:
Erfassen einer Kennung des Betriebsmittels, das betrieben werden soll, aus dem Betriebsmanagementbefehl, und
Erfassen des Bedienerattributs des Betriebsmittels, das betrieben werden soll, aus der Kennung des Betriebsmittels, das betrieben werden soll;
wobei der Betriebsmanagementbefehl die Kennung des Betriebsmittels, das betrieben werden soll, führt und die Kennung des Betriebsmittels, das betrieben werden soll,
vorkonfiguriert ist, um das Bedienerattribut des Betriebsmittels, das betrieben werden soll, anzugeben.

6. Verfahren nach einem der Ansprüche 1 bis 4, wobei das Erfassen des Bedienerattributs des Betriebsmittels, das betrieben werden soll, gemäß dem Betriebsmanagementbefehl Folgendes umfasst:
Erfassen einer Kennung des Betriebsmittels, das betrieben werden soll, aus dem Betriebsmanagementbefehl; und
Abfragen einer Betriebsmittelkonfigurationsinformationsbasis, um das Bedienerattribut des Betriebsmittels, das betrieben werden soll, zu erfassen;
wobei der Betriebsmanagementbefehl die Kennung des Betriebsmittels, das betrieben werden soll, führt und wobei die Betriebsmittelkonfigurationsinformationsbasis das Bedienerattribut des Betriebsmittels, das betrieben werden soll, entsprechend der Kennung des Betriebsmittels, das betrieben werden soll, speichert.

7. Verfahren nach einem der Ansprüche 1 bis 6, wobei, falls das Bedienerattribut des Anwenders mit dem Bedienerattribut des Betriebsmittels, das betrieben werden soll, inkonsistent ist, das Ausführen des Betriebsvorgangs, der dem Betriebsmanagementbefehl entspricht, abgebrochen wird.

8. Verfahren nach einem der Ansprüche 1 bis 6, wobei das Verfahren nach dem Erfassen des Bedienerattributs des Anwenders ferner Folgendes umfasst:
Bestimmen, ob der Anwender ein privilegierter Anwender ist, gemäß dem Bedienerattribut des Anwenders und, falls der Anwender ein privilegierter Anwender ist, Ausführen des Betriebsvorgangs entsprechend dem Betriebsmanagementbefehl.

9. Gemeinsam verwendetes Netzelement, das Folgendes umfasst:
ein Befehlsempfangsmodul (51), das ausgelegt ist, von einem Anwender einen Betriebsmanagementbefehl zum Betreiben eines Betriebsmittels auf dem gemeinsam verwendeten Netzelement zu empfangen, wobei der Betriebsmanagementbefehl eine Kennung des Betriebsmittels, das betrieben werden soll, führt; und **gekennzeichnet durch**:
ein erstes Attributerfassungsmodul (52) , das konfiguriert ist, ein Bedienerattribut des Anwenders gemäß dem Betriebsmanagementbefehl zu erfassen;
ein zweites Attributerfassungsmodul (53), das konfiguriert ist, ein Bedienerattribut des Betriebsmittels, das betrieben werden soll, gemäß dem Betriebsmanagementbefehl zu erfassen; und
ein Ausführungsmodul (54), das konfiguriert ist, einen Betriebsvorgang entsprechend dem Betriebsmanagementbefehl auszuführen, wenn das Bedienerattribut des Anwenders, das **durch** das erste Attributerfassungsmodul erfasst wird, mit dem Bedienerattribut des Betriebsmittels, das betrieben werden soll und das **durch** das zweite Attributerfassungsmodul erfasst wird, konsistent ist.

10. Gemeinsam verwendetes Netzelement nach Anspruch 9,
wobei das erste Attributerfassungsmodul konfiguriert ist: eine Kennung des Anwenders gemäß den Login-Verbindungsinformationen des Anwenders zu erfassen; und eines des Folgenden auszuführen:
Abfragen einer Anwenderkonfigurationsinformationsbasis gemäß der Kennung des Anwenders, um das Bedienerattribut des Anwenders zu erfassen, wobei die Anwenderkonfigurationsinformationsbasis das Bedienerattribut des Anwenders, das der Kennung des Anwenders entspricht, speichert; und
Erfassen des Bedienerattributs des Anwenders aus der Kennung des Anwenders,
wobei die Kennung des Anwenders vorkonfiguriert ist, um das Bedienerattribut des Anwenders anzugeben; und wobei das zweite Attributerfassungsmodul konfiguriert ist: die Kennung des Betriebsmittels, das betrieben werden soll, aus dem Betriebsmanagementbefehl, der durch das Befehlsempfangsmodul empfangen wird, zu erfassen; und eines des Folgenden auszuführen:
Abfragen einer Betriebsmittelkonfigurationsinformationsbasis gemäß der Kennung des Betriebsmittels, das betrieben werden soll, um das Bedienerattribut des Betriebsmittels, das betrieben werden soll, zu erfassen, und wobei die Betriebsmittelkonfigurationsinformationsbasis das Bedienerattribut des Betriebsmittels, das betrieben werden soll, entsprechend der Kennung des Betriebsmittels, das betrieben werden soll, speichert; und
Erfassen des Bedienerattributs des Betriebsmittels, das betrieben werden soll, aus der Kennung des Betriebsmittels, das betrieben werden soll, wobei die Kennung des Betriebsmittels, das betrieben werden soll, vorkonfiguriert ist, um das Bedienerattribut des Betriebsmittels, das betrieben werden soll, anzugeben.

11. Gemeinsam verwendetes Netzelement nach Anspruch 9 oder 10, wobei das Ausführungsmodul Folgendes umfasst:
eine Ausführungseinheit für den privilegierten Anwender, die konfiguriert ist, gemäß dem Bedienerattribut des Anwenders zu bestimmen, ob der Anwender ein privilegierter Anwender ist, und, falls der Anwender ein privilegierter Anwender ist, den Betriebsvorgang entsprechend dem Betriebsmanagementbefehl auszuführen.

12. Gemeinsam verwendetes Netzelement nach einem der Ansprüche 9 bis 11, wobei das Ausführungsmodul ferner konfiguriert ist, das Ausführen des Betriebsvorgangs, der dem Betriebsmanagementbefehl entspricht, abzubrechen, wenn das Bedienerattribut des Anwenders mit dem Bedienerattribut des Betriebsmittels, das betrieben werden soll, inkonsistent ist.

13. Kommunikationssystem, das eine Netzelementmanagementvorrichtung und ein gemeinsam verwendetes Netzelement umfasst, wobei
die Netzelementmanagementvorrichtung (61) konfiguriert ist, eine Mensch-Maschine-Schnittstelle bereitzustellen, einen durch einen Anwender durch die Mensch-Maschine-Schnittstelle eingegebenen Betriebsmanagementbefehl zu empfangen, ein Bedienerattribut des Anwenders zu erfassen und das Bedienerattribut des Anwenders in den Betriebsmanagementbefehl zu verkapseln und den verkapselten Betriebsmanagementbefehl zu dem gemeinsam verwendeten Netzelement zu senden, wobei der Betriebsmanagementbefehl verwendet wird, um ein Betriebsmittel auf dem gemeinsam verwendeten Netzelement zu betreiben; und das gemeinsam verwendete Netzelement (62) konfiguriert ist, den verkapselten Betriebsmanagementbefehl zu empfangen, und **dadurch gekennzeichnet, dass** das gemeinsam verwendete Netzelement (62) ferner konfiguriert ist,
das Bedienerattribut des Anwenders aus dem verkapselten Betriebsmanagementbefehl zu erfassen, ein Bedienerattribut des Betriebsmittels, das betrieben werden soll, gemäß dem verkapselten Betriebsmanagementbefehl zu erfassen, und einen Betriebsvorgang, der dem Betriebsmanagementbefehl entspricht, auszuführen, wenn das Bedienerattribut des Anwenders mit dem Bedienerattribut des Betriebsmittels, das betrieben werden soll, konsistent ist.

14. System nach Anspruch 13, wobei die Netzelementmangementvorrichtung konfiguriert ist, eine Kennung des Anwenders gemäß Login-Verbindungsinformationen des Anwenders zu erfassen; und eines des Folgenden auszuführen:
Abfragen einer Anwenderkonfigurationsinformationsbasis gemäß der Kennung des Anwenders, um das Bedienerattribut des Anwenders zu erfassen, wobei die Anwenderkonfigurationsinformationsbasis auf dem gemeinsam verwendeten Netzelement (62) konfiguriert ist und das Bedienerattribut des Anwenders, das der Kennung des Anwenders entspricht, speichert; und
Erfassen des Bedienerattributs des Anwenders aus der Kennung des Anwenders, wobei die Kennung des Anwenders vorkonfiguriert ist, um das Bedienerattribut des Anwenders anzugeben.

15. System nach Anspruch 13 oder 14, wobei das gemeinsam verwendete Netzelement konfiguriert ist, die Kennung des Betriebsmittels, das betrieben werden soll, aus dem verkapselten Betriebsmanagementbefehl zu erfassen, wobei der Betriebsmanagementbefehl die Kennung des Betriebsmittels führt; und eines des Folgenden auszuführen:
Abfragen einer Betriebsmittelkonfigurationsinformationsbasis gemäß der Kennung des Betriebsmittels, das betrieben werden soll, um das Bedienerattribut des Betriebsmittels, das betrieben werden soll, zu erfassen, und wobei die Betriebsmittelkonfigurationsinformationsbasis auf dem gemeinsam verwendeten Netzelement (62) konfiguriert ist und das Bedienerattribut des Betriebsmittels, das betrieben werden soll, entsprechend der Kennung des Betriebsmittels, das betrieben werden soll, speichert; und
Erfassen eines Bedienerattributs des Betriebsmittels, das betrieben werden soll, aus der Kennung des Betriebsmittels, das betrieben werden soll, wobei die Kennung des Betriebsmittels, das betrieben werden soll, vorkonfiguriert ist, um das Bedienerattribut des Betriebsmittels, das betrieben werden soll, anzugeben.

## Revendications

1. Procédé d'exploitation d'une ressource sur un élément de réseau partagé, comprenant :
la réception (201) en provenance d'un utilisateur, d'une commande de gestion d'exploitation pour exploiter une ressource sur un élément de réseau partagé ; et **caractérisé par**
l'acquisition (202) d'un attribut d'opérateur de la ressource à exploiter et d'un attribut d'opérateur de l'utilisateur conformément à la commande de gestion d'exploitation ; et
l'exécution (203) d'une action d'exploitation correspondant à la commande de gestion d'exploitation si l'attribut d'opérateur de l'utilisateur concorde avec l'attribut d'opérateur de la ressource à exploiter.

2. Procédé selon la revendication 1, dans lequel l'acquisition de l'attribut d'opérateur de l'utilisateur conformément à la commande de gestion d'exploitation comprend :
l'acquisition d'un identifiant de l'utilisateur à partir d'informations de connexion de session de l'utilisateur lors de la réception de la commande de gestion d'exploitation ; et
l'acquisition de l'attribut d'opérateur de l'utilisateur à partir de l'identifiant de l'utilisateur ;
dans lequel l'identifiant de l'utilisateur est configuré à l'avance pour indiquer l'attribut d'opérateur de l'utilisateur.

3. Procédé selon la revendication 1, dans lequel l'acquisition de l'attribut d'opérateur de l'utilisateur conformément à la commande de gestion d'exploitation comprend :
l'acquisition d'un identifiant de l'utilisateur à partir d'informations de connexion de session de l'utilisateur lors de la réception de la commande de gestion d'exploitation ; et
l'interrogation d'une base d'informations de configuration d'utilisateur de l'utilisateur conformément à l'identifiant de l'utilisateur afin d'acquérir l'attribut d'opérateur de l'utilisateur ;
dans lequel la base d'informations de configuration d'utilisateur stocke l'attribut d'opérateur de l'utilisateur correspondant à l'identifiant de l'utilisateur.

4. Procédé selon la revendication 1, dans lequel l'acquisition de l'attribut d'opérateur de l'utilisateur conformément à la commande de gestion d'exploitation comprend :
l'acquisition de l'attribut d'opérateur de l'utilisateur à partir de la commande de gestion d'exploitation ; dans lequel la commande de gestion d'exploitation achemine l'attribut d'opérateur de l'utilisateur.

5. Procédé selon l'une quelconque des revendications 1 à 4, dans lequel l'acquisition de l'attribut d'opérateur de la ressource à exploiter conformément à la commande de gestion d'exploitation comprend :
l'acquisition d'un identifiant de la ressource à exploiter à partir de la commande de gestion d'exploitation, et
l'acquisition de l'attribut d'opérateur de la ressource à exploiter à partir de l'identifiant de la ressource à exploiter ;
dans lequel la commande de gestion d'exploitation achemine l'identifiant de la ressource à exploiter, et l'identifiant de la ressource à exploiter est configuré à l'avance pour indiquer l'attribut d'opérateur de la ressource à exploiter.

6. Procédé selon l'une quelconque des revendications 1 à 4, dans lequel l'acquisition de l'attribut d'opérateur de la ressource à exploiter conformément à la commande de gestion d'exploitation comprend :
l'acquisition d'un identifiant de la ressource à exploiter à partir de la commande de gestion d'exploitation ; et
l'interrogation d'une base d'informations de configuration de ressource afin d'acquérir l'attribut d'opérateur de la ressource à exploiter ;
dans lequel la commande de gestion d'exploitation achemine l'identifiant de la ressource à exploiter, et dans lequel la base d'informations de configuration de ressource stocke l'attribut d'opérateur de la ressource à exploiter correspondant à l'identifiant de la ressource à exploiter.

7. Procédé selon l'une quelconque des revendications 1 à 6, dans lequel, si l'attribut d'opérateur de l'utilisateur ne concorde pas avec l'attribut d'opérateur de la ressource à exploiter, l'exécution de l'action d'exploitation correspondant à la commande de gestion d'exploitation est interrompue.

8. Procédé selon l'une quelconque des revendications 1 à 6, dans lequel, après l'acquisition de l'attribut d'opérateur de l'utilisateur, le procédé comprend en outre :
la détermination du fait de savoir si l'utilisateur est un utilisateur privilégié conformément à l'attribut d'opérateur de l'utilisateur, et si l'utilisateur est un utilisateur privilégié, l'exécution de l'action d'exploitation correspondant à la commande de gestion d'exploitation.

9. Elément de réseau partagé, comprenant :
un module de réception de commande (51), configuré pour recevoir, en provenance d'un utilisateur, une commande de gestion d'exploitation destinée à exploiter une ressource sur l'élément de réseau partagé,
dans lequel la commande de gestion d'exploitation achemine un identifiant de la ressource à exploiter ; et **caractérisé par** :
un premier module d'acquisition d'attribut (52), configuré pour acquérir un attribut d'opérateur de l'utilisateur conformément à la commande de gestion d'exploitation ;
un second module d'acquisition d'attribut (53), configuré pour acquérir un attribut d'opérateur de la ressource à exploiter conformément à la commande de gestion d'exploitation ; et
un module d'exécution (54), configuré pour exécuter une action d'exploitation correspondant à la commande de gestion d'exploitation lorsque l'attribut d'opérateur de l'utilisateur acquis par le premier module d'acquisition d'attribut concorde avec l'attribut d'opérateur de la ressource à exploiter acquis par le second module d'acquisition d'attribut.

10. Elément de réseau partagé selon la revendication 9,
dans lequel le premier module d'acquisition d'attribut est configuré pour :
acquérir un identifiant de l'utilisateur à partir d'informations de connexion de session de l'utilisateur ; et exécuter l'une quelconque des opérations suivantes :
l'interrogation d'une base d'informations de configuration d'utilisateur conformément à l'identifiant de l'utilisateur pour acquérir l'attribut d'opérateur de l'utilisateur, dans lequel la base d'informations de configuration d'utilisateur stocke l'attribut d'opérateur de l'utilisateur correspondant à l'identifiant de l'utilisateur ; et l'acquisition de l'attribut d'opérateur de l'utilisateur à partir de l'identifiant de l'utilisateur, dans lequel l'identifiant de l'utilisateur est configuré à l'avance pour indiquer l'attribut d'opérateur de l'utilisateur ; et
dans lequel le second module d'acquisition d'attribut est configuré pour : acquérir l'identifiant de la ressource à exploiter à partir de la commande de gestion d'exploitation reçue par le module de réception de commande ; et exécuter l'une quelconque des opérations suivantes :
l'interrogation d'une base d'informations de configuration de ressource conformément à l'identifiant de la ressource à exploiter afin d'acquérir l'attribut d'opérateur de la ressource à exploiter, et dans lequel la base d'informations de configuration de ressource stocke l'attribut d'opérateur de la ressource à exploiter correspondant à l'identifiant de la ressource à exploiter ; et
l'acquisition de l'attribut d'opérateur de la ressource à exploiter à partir de l'identifiant de la ressource à exploiter, dans lequel l'identifiant de la ressource à exploiter est configuré à l'avance pour indiquer l'attribut d'opérateur de la ressource à exploiter.

11. Elément de réseau partagé selon la revendication 9 ou 10, dans lequel le module d'exécution comprend :
une unité d'exécution d'utilisateur privilégié, configurée pour déterminer si l'utilisateur est un utilisateur privilégié conformément à l'attribut d'opérateur de l'utilisateur, et si l'utilisateur est un utilisateur privilégié, exécuter l'action d'exploitation correspondant à la commande de gestion d'exploitation.

12. Elément de réseau partagé selon l'une quelconque des revendications 9 à 11, dans lequel le module d'exécution est en outre configuré pour interrompre l'exécution de l'action d'exploitation correspondant à la commande de gestion d'exploitation lorsque l'attribut d'opérateur de l'utilisateur ne concorde pas avec l'attribut d'opérateur de la ressource à exploiter.

13. Système de communication, comprenant un appareil de gestion d'élément de réseau et un élément de réseau partagé, dans lequel
l'appareil de gestion d'élément de réseau (61) est configuré pour fournir une interface homme-machine, recevoir une commande de gestion d'exploitation saisie par un utilisateur par l'intermédiaire de l'interface homme-machine, acquérir un attribut d'opérateur de l'utilisateur, et encapsuler l'attribut d'opérateur de l'utilisateur dans la commande de gestion d'exploitation, et envoyer la commande de gestion d'exploitation encapsulée à l'élément de réseau partagé, dans lequel la commande de gestion d'exploitation est utilisée pour exploiter une ressource sur l'élément de réseau partagé ; et
l'élément de réseau partagé (62) est configuré pour recevoir la commande de gestion d'exploitation encapsulée, et est **caractérisé en ce que** l'élément de réseau partagé (62) est en outre configuré pour
acquérir l'attribut d'opérateur de l'utilisateur à partir de la commande de gestion d'exploitation encapsulée, acquérir un attribut d'opérateur de la ressource à exploiter conformément à la commande de gestion d'exploitation encapsulée, et exécuter une action d'exploitation correspondant à la commande de gestion d'exploitation lorsque l'attribut d'opérateur de l'utilisateur concorde avec l'attribut d'opérateur de la ressource à exploiter.

14. Système selon la revendication 13, dans lequel l'appareil de gestion d'élément de réseau est configuré pour acquérir un identifiant de l'utilisateur conformément à des informations de connexion de session de l'utilisateur ; et exécuter l'une quelconque des opérations suivantes :
l'interrogation d'une base d'informations de configuration d'utilisateur conformément à l'identifiant de l'utilisateur afin d'acquérir l'attribut d'opérateur de l'utilisateur, dans lequel la base d'informations de configuration d'utilisateur est configurée sur l'élément de réseau partagé (62) et stocke l'attribut d'opérateur de l'utilisateur correspondant à l'identifiant de l'utilisateur ; et
l'acquisition de l'attribut d'opérateur de l'utilisateur à partir de l'identifiant de l'utilisateur, dans lequel l'identifiant de l'utilisateur est configuré à l'avance pour indiquer l'attribut d'opérateur de l'utilisateur.

15. Système selon la revendication 13 ou 14, dans lequel l'élément de réseau partagé est configuré pour acquérir l'identifiant de la ressource à exploiter à partir de la commande de gestion d'exploitation encapsulée, dans lequel la commande de gestion d'exploitation achemine l'identifiant de la ressource ; et exécuter l'une quelconque des opérations suivantes :
l'interrogation d'une base d'informations de configuration de ressource conformément à l'identifiant de la ressource à exploiter afin d'acquérir l'attribut d'opérateur de la ressource à exploiter, et dans lequel la base d'informations de configuration de ressource est configurée sur l'élément de réseau partagé (62) et stocke l'attribut d'opérateur de la ressource à exploiter correspondant à l'identifiant de la ressource à exploiter ; et
l'acquisition de l'attribut d'opérateur de la ressource à exploiter à partir de l'identifiant de la ressource à exploiter, dans lequel l'identifiant de la ressource à exploiter est configuré à l'avance pour indiquer l'attribut d'opérateur de la ressource à exploiter.
